(19) Europäisches Patentamt
European Patent Office
Office européen des brevets

(11) Veröffentlichungsnummer: **0 038 924**
**B1**

(12) # EUROPÄISCHE PATENTSCHRIFT

(45) Veröffentlichungstag der Patentschrift: **30.05.84**

(51) Int. Cl.³: **C 08 F 299/02,** C 08 F 4/70, C 08 L 67/06

(21) Anmeldenummer: **81101766.4**

(22) Anmeldetag: **10.03.81**

(54) **Beschleuniger für die Härtung von ungesättigten Harzen und seine Verwendung.**

(30) Priorität: **25.04.80 DE 3016051**

(43) Veröffentlichungstag der Anmeldung: **04.11.81 Patentblatt 81/44**

(45) Bekanntmachung des Hinweises auf die Patenterteilung: **30.05.84 Patentblatt 84/22**

(84) Benannte Vertragsstaaten: **BE CH DE FR GB IT LI NL SE**

(56) Entgegenhaltungen:
**DE - B - 1 103 026**
**US - A - 2 822 343**

**Die Akte enthält technische Angaben, die nach dem Eingang der Anmeldung eingereicht wurden und die nicht in dieser Patentschrift enthalten sind.**

(73) Patentinhaber: **Peroxid-Chemie GmbH, Dr.-Gustav-Adolph-Strasse 2, D-8023 Höllriegelskreuth bei München (DE)**

(72) Erfinder: **Binder, Klaus, Lisztstrasse 19, D-8000 München 80 (DE)**
Erfinder: **Edl, Wolfgang, Dr., Marienstrasse 3, D-8023 Grosshesselohe (DE)**
Erfinder: **Twittenhoff, Hansjoachim, Urspringerstrasse 3, D-8021 Strasslach (DE)**

(74) Vertreter: **Weickmann, Heinrich, Dipl.-Ing. et al, Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska Möhlstrasse 22, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



EP 0 038 924 B1

## Beschreibung

Die Erfindung betrifft einen Beschleuniger für die Härtung von ungesättigten Harzen und seine Verwendung.

Aus der DE-OS Nr. 2538013 ist bereits ein Verfahren zum Härten von ungesättigten Harzen, namentlich ungesättigten Polyestern, bekannt, das darin besteht, ein α, β-ungesättigtes β-Aminoketon als Beschleuniger in Kombination mit einem Peroxid, das eine Hydroperoxidgruppe enthält, namentlich Wasserstoffperoxid, zu verwenden. Es ist in dieser Druckschrift erwähnt, dass man ein drittes Reagens, wie ein metallisches Salz, insbesondere ein Kobaltsalz, als Beschleuniger einsetzen kann. Dieses Beschleunigersystem lässt sich auf schwer härtbare Harze nur zusammen mit Wasserstoffperoxid einsetzen, während es zusammen mit organischen Peroxiden für diese Harze nicht anwendbar ist.

Aus der DE-AS Nr. 2337332 ist es bekannt, als Härtungsbeschleuniger von ungesättigten Polyester- oder Alkydharzmassen bestimmte Chelatverbindungen von Übergangsmetallen einzusetzen, wie beispielsweise Bis-(N-phenylsalicylideniminato)kobalt oder Bis-(N-tert.-butylsalicylideniminato)kupfer.

Schliesslich offenbart die DE-OS Nr. 2407713 die Verwendung von Acetessigsäureamiden cyclischer Amine in ungesättigten Polyesterharzform- und -überzugsmassen. Diese Acetessigsäureesteramide können in Kombination mit Beschleunigern wie Kobaltsalze, namentlich Kobaltoctoat und Kobaltnaphthenat, eingesetzt werden.

Diese herkömmlichen Verfahren, bei denen organische Kobaltsalze als Beschleuniger verwendet werden, leiden an dem Nachteil der Verfärbung der gehärteten Harze. Darüber hinaus neigen die Kobaltsalze enthaltenden Beschleunigerlösungen häufig zu einer Ausfällung der Kobaltsalze, z.B. bei Beschleunigerlösungen gemäss DE-OS Nr. 2538013, so dass sie nicht die erforderliche Lagerstabilität besitzen.

Die Aufgabe der vorliegenden Erfindung besteht nun darin, einen Beschleuniger bzw. ein Beschleunigersystem für die Härtung von ungesättigten Harzen und insbesondere schwer härtbaren ungesättigten Harzen anzugeben, der bzw. das die erforderliche Lagerstabilität besitzt und ohne Verfärbung der gehärteten Harze zu einer schnellen und vollständigen Aushärtung der Harze führt, und dies unter Anwendung üblicher organischer Peroxidhärter.

Es hat sich nun überraschenderweise gezeigt, dass diese Aufgabe mit Hilfe eines Beschleunigers gelöst werden kann, der ein Gemisch aus einem Ketimin und einer anorganischen oder organischen Kupfer (II)- oder Eisen (III)verbindung und gegebenenfalls einem organischen Lösungsmittel darstellt.

Gegenstand der Erfindung ist daher ein Beschleuniger für die Härtung von ungesättigten Harzen, welcher gekennzeichnet ist durch ein Gemisch aus mindestens einem Ketimin und mindestens einer anorganischen oder organischen Kupfer (II)- oder Eisen (III)verbindung.

Der erfindungsgemässe Beschleuniger ist für die Härtung von ungesättigten Harzen und insbesondere von schwer härtbaren ungesättigten Harzen geeignet, wie für schwer härtbare ungesättigte Polyesterharze auf Basis von o-Phthalsäure oder Isophthalsäure, für Harze des Bisphenol-A-Typs oder des Neopentylglykoltyps oder für Vinylesterharze und Acrylharze.

Der erfindungsgemässe Beschleuniger enthält als organische Kupfer(II)- bzw. Eisen(III)verbindung vorzugsweise ein Salz dieser Elemente mit einer organischen Fettsäure mit 6 bis 22 Kohlenstoffatomen oder mit einer Naphthensäure. Besonders bevorzugt werden unter den organischen und anorganischen Salzen Kupfer (II)acetat, Kupfer(II)naphthenat, Eisen(III)chlorid und Eisen-(III)octoat. Diese Salze führen zu einer schnellen und vollständigen Aushärtung der oben angesprochenen ungesättigten Harze und führen insbesondere im Fall von Kupfer zu überraschend niedrigen Verfärbungen, wobei man auch recht lichtstabile Produkte erhält, die bei anschliessender Bewitterung keine merkliche weitere Veränderung der Färbung, die schwach gelblich ist, zeigen. Für die Harze, die eine stärkere Eigenfarbe besitzen, wie die Polyesterharze auf Isophthalsäurebasis, die Bisphenol-A-Harze, die Neopentylglykolharze und die Binylesterharze, bietet sich der Einsatz von Eisen(III)verbindungen eher an, die zu einer gewissen Verfärbung neigen.

Neben dieser Kupfer(II)- oder Eisen(III)verbindung enthält der erfindungsgemässe Beschleuniger ein Ketimin. Bevorzugt werden Ketimine der nachstehenden allgemeinen Formel I, die nur eine der möglichen tautomeren Formen wiedergibt,

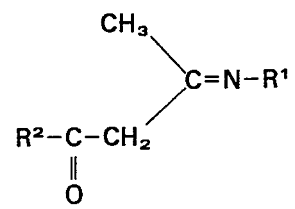

(I)

in der

$R^1$ Wasserstoff, eine geradkettige oder verzweigte Alkylgruppe oder Aralkylgruppe mit 1 bis 10 Kohlenstoffatomen oder eine Cycloalkylgruppe mit 3 bis 8 Kohlenstoffatomen, vorzugsweise eine n-Propylgruppe, eine Isopropylgruppe, eine n-Pentylgruppe, eine Isopentylgruppe, eine n-Decylgruppe oder eine Cyclohexylgruppe, und

$R^2$ eine Alkylgruppe oder Alkoxygruppe mit 1 bis 4 Kohlenstoffatomen oder eine Aryl- oder Aryloxygruppe, vorzugsweise eine Methylgruppe oder eine Ethoxygruppe,

bedeuten.

Die Ketimine erhält man durch Umsetzung eines primären Alkylamins, Aralkylamins oder von Ammoniak mit einem β-Diketon, vorzugsweise durch Umsetzung eines primären Amins der allgemeinen Formel II

$$H_2NR^1 \qquad (II)$$

mit einer Verbindung der allgemeinen Formel III

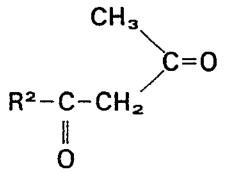

(III)

in welchen allgemeinen Formeln $R^1$ und $R^2$ die oben angegebenen Bedeutungen besitzen. Man arbeitet dabei unter Anwendung stöchiometrischer Verhältnisse, so dass man 1 mol Amin mit 1 mol β-Diketon umsetzt. Vorzugsweise setzt man den einen oder den anderen Reaktionsteilnehmer in einem geringfügigen Überschuss ein.

Die Reaktion verläuft ohne weiteres exotherm und liefert das gewünschte Ketimin. Statt des separat hergestellten Ketimins kann der erfindungsgemässe Beschleuniger das Ketimin auch *in situ* enthalten, d. h. in Form einer Mischung der Ausgangskomponenten, d.h. von Amin und β-Diketon.

Gemäss einer bevorzugten Ausführungsform der Erfindung enthält der Beschleuniger ein organisches Lösungsmittel, das mit dem zu härtenden Harz verträglich ist und in dem das Ketimin und die eingesetzte Kupfer(II)- oder Eisen(III)verbindung löslich ist. Dieses organische Lösungsmittel kann ein Alkohol, wie Isopropylalkohol, oder ein aromatischer Kohlenwasserstoff, wie Toluol oder Xylol, sein.

Es hat sich als vorteilhaft erwiesen, dass der gegebenenfalls lösungsmittelhaltige Beschleuniger die Kupfer(II)- oder Eisen(III)verbindung in einer Menge von 0,1 bis 1 Gew.-%, vorzugsweise in einer Menge von etwa 0,2 Gew.-% enthält, und zwar als Metall gerechnet und auf den Beschleuniger inklusive des gegebenenfalls vorhandenen Lösungsmittels bezogen.

Die Herstellung des Beschleunigers der Erfindung erfolgt einfach durch mischen der Bestandteile. Anstelle von gesondert hergestelltem Ketimin kann man dabei, wie oben erwähnt, auch eine Mischung aus Amin und β-Diketon einsetzen.

Gegenstand der Erfindung ist weiterhin ein Verfahren zur Härtung der oben angesprochenen ungesättigten Harze, das dadurch gekennzeichnet ist, dass man den erfindungsgemässen Beschleuniger in Kombination mit einem üblichen Härter verwendet. Als Härter setzt man vorzugsweise organische Härter, wie Ketonperoxide, Hydroperoxide und/oder Perester ein. Besonders bevorzugte Härter dieser Art sind Methyläthylketonperoxid, Methylisobutylketonperoxid, Acetylacetonperoxid, Cyclohexanonperoxid, tert.-butylhydroperoxid, Cumolhydroperoxid, tert.-Butyl-per-2-äthylhexanoat und/oder tert.-Butylperbenzoat. Der erfindungsgemässe Beschleuniger wird vorzugsweise in einer Menge zugesetzt, die 0,001 bis 0,02 Gew.-% Metall und 0,005 bis 0,5 Gew.-% Ketimin, jeweils bezogen auf das Harz, ergibt. Besonders bevorzugt setzt man 0,2 bis 2 Gew.-% Beschleuniger ein. Diese organischen Peroxide werden in Mengen von 0,5 bis 3%, auf das zu härtende ungesättigte Harz bezogen, eingesetzt.

Als Verbindungen der allgemeinen Formel II verwendet man vorzugsweise primäre aliphatische oder cycloaliphatische Amine mit 3 bis 8 Kohlenstoffatomen, wie insbesondere n-Propylamin, Isopropylamin, n-Pentylamin, Isopentylamin, n-Decylamin oder insbesondere Cyclohexylamin.

Die bevorzugten Reaktionsteilnehmer der oben angesprochenen allgemeinen Formel III sind Acetylaceton und Acetessigester.

Die nachfolgenden Beispiele dienen der weiteren Erläuterung der Erfindung. Die in den Beispielen für die Härtung angegebenen Parameter Gelierzeit, Härtungszeit und Temperatur wurden in allen Fällen gemäss der DIN-Norm 16 945 bestimmt. Soweit hiervon abgewichen wurde, ist dies ausdrücklich angegeben, beispielsweise bezüglich der Becherhärtung bei 23°C.

*Herstellungsbeispiel*

Dieses Beispiel verdeutlicht die Herstellung der in dem erfindungsgemässen Beschleuniger eingesetzten Ketimine der allgemeinen Formel I.

*1.0 Acetylacetoncyclohexylimin*

Man vermischt 0,1 mol Acetylaceton mit 0,1 mol Cyclohexylamin. Nach dem Abklingen der exothermen Reaktion erhält man die gewünschte Verbindung.

*1.1 Acetylaceton-n-propylimin*

Man vermischt 0,1 mol (5,9 g) n-Propylamin mit 0,1 mol (10 g) Acetylaceton. Es erfolgt eine exotherme Reaktion, bei der ein gelbliches, flüssiges Ketimin anfällt, das auch nach längerer Lagerung keinen Niederschlag ergibt.

*1-2 Acetylacetonisopropylimin*

Man vermischt 0,1 mol (5,9 g) Isopropylamin mit 0,1 mol (10 g) Acetylaceton. Es ergibt sich eine exotherme Reaktion, bei der ein gelblich kristallines Ketimin anfällt, das nach einem Tag langsam schmilzt und dann flüssig bleibt.

*1.3 Acetylaceton-n-pentylimin*

Man vermischt 0,1 mol (8,7 g) n-Pentylamin mit 0,1 mol (10 g) Acetylaceton. Es erfolgt eine exotherme Reaktion, bei der ein gelblich flüssiges, aber trübes Ketimin anfällt, das sich nach 24 h klärt, jedoch in zwei Phasen vorliegt.

*1.4 Acetylacetonisopentylimin*

Man vermischt 0,1 mol (8,7 g) Isopentylamin mit 0,1 mol (10 g) Acetylaceton. Es ergibt sich eine exotherme Reaktion, bei der ein gelblich flüssiges, stark trübes Ketimin anfällt, das sich jedoch nach 24 h klärt und in zwei Phasen vorliegt.

*1.5 Acetylaceton-n-decylimin*

Man vermischt 0,1 mol (15,7 g) n-Decylamin mit 0,1 mol (10 g) Acetylaceton. Es erfolgt eine exotherme Reaktion, bei der ein gelblich flüssiges Ketimin, das eine erhebliche Niederschlagsmenge enthält, anfällt, das auch bei längerer Lagerung in diesem Zustand verbleibt.

*1.6 Acetessigsäureäthylestercyclohexylimin*

Man vermischt 0,1 mol (13,0 g) Acetessigsäureäthylester mit 0,1 mol (9,9 g) Cyclohexylamin. Es erfolgt eine exotherme Reaktion, bei der ein gelblich klares Reaktionsprodukt anfällt, das frei ist von Niederschlägen und bei längerem Lagern keine Veränderung zeigt.

*Beispiel 1:*

*Kupferketiminbeschleuniger (ACU 1)*

Man vermischt 10 Gew.-%-Teile des durch Umsetzen von 1 mol Acetylaceton mit 1 mol Cyclohexylamin gebildeten Ketimins (Acetylacetoncyclohexylimin gemäss Herstellungsbeispiel 1.0) mit 2 Gew.-Teilen Kupfernaphthenat (10% Kupfer) und 88 Gew.-Teilen Isopropylalkohol. Man erhält 100 Gew.-Teile einer grünlich gefärbten, niedrigviskosen Flüssigkeit mit einem Kupfergehalt von 0,2 Gew.-% (als metall gerechnet), die zur Härtung von normalen Polyesterharzen geeignet ist.

Anstelle des Ketimins kann man auch die Mischung seiner Ausgangskomponenten direkt mit dem Lösungsmittel und der Kupferverbindung zusammengeben.

*Beispiel 2:*

*Kupferketiminbeschleuniger (ACU 3)*

Man vermischt 30 Gew.-Teile des in Beispiel 1 verwendeten Ketimins mit 2 Gew.-Teilen Kupfernaphthenat (10% Kupfer) und 68 Gew.-Teilen Isopropylalkohol und erhält 100 Gew.-Teile einer grünlichen, mittelviskosen Flüssigkeit mit einem Kupfergehalt von 0,2 Gew.-% (als Metall gerechnet), die zur Härtung von Vinylesterharzen geeignet ist.

*Beispiel 3:*

*Eisenketiminbeschleuniger (AFE 1)*

Man vermischt 10 Gew.-Teile des in Beispiel 1 verwendeten Ketimins mit 3,33 Gew.-Teilen Eisenoctoat (6% Eisen) und 86,67 Gew.-Teilen Isopropylalkohol und erhält 100 Gew.-Teile einer rötlichen, niedrigviskosen Flüssigkeit mit einem Eisengehalt von 0,2% (auf das Metall bezogen), die zur Härtung von normalen Polyesterharzen geeignet ist.

*Beispiel 4:*

*Eisenketiminbeschleuniger (AFE 3)*

Man vermischt 30,0 Gew.-Teile des gemäss Beispiel 1 verwendeten Ketimins mit 3,33 Gew.-Teilen Eisenoctoat (6% Eisen) und 66,67 Gew.-Teilen Isopropylalkohol und erhält 100 Gew.-Teile einer rötlichen, mittelviskosen Flüssigkeit mit einem Eisengehalt von 0,2 Gew.-% (als Metall gerechnet).

*Beispiele 5 bis 10:*

Nach der Verfahrensweise der Beispiele 1 bis 4 bildet man durch Vermischen von 2 g Kupfernaphthenat mit 10 g der in den Herstellungsbeispielen 1.1 bis 1.5 beschriebenen Ketimine und 88 g Isopropylalkohol die Beschleuniger ACU 1 (1.1), ACU 1 (1.2), ACU 1 (1.3), ACU 1 (1.4), ACU 1 (1.5) und ACU 3 (Ac-Ester) (1.6).

*Beispiel 11 (Vergleichsbeispiel)*

a) Man bereitet einen Beschleuniger durch Vermischen von 2,0 g Kobaltoctoat bzw. Kobaltnaphthenat mit 10,0 g des in Beispiel 1 verwendeten Ketimins (Acetylacetoncyclohexylimin) und 88 g Isopropylalkohol. Es ergibt sich eine trübe Mischung, aus der die Kobaltsalze ausgefallen sind.

b) Man vermischt 2,0 g Kobaltoctoat bzw. Kobaltnaphthenat mit 30,0 g des in Beispiel 1 verwendeten Ketimins (Acetylacetoncyclohexylimin) und 68 g Isopropylalkohol. Man erhält eine trübe Mischung, aus der die Kobaltsalze ausfallen. Diese Beschleunigergemische sind somit ungeeignet und lassen sich auch bezüglich ihrer Aktivität nicht prüfen, da sie nicht pipettiert werden können.

*Beispiel 12:*

*Untersuchung der Beschleunigereigenschaften*

1) *Lagerstabilität*

Bei einer Lagerzeit von 4 Monaten konnte bei den erfindungsgemässen Beschleunigern keinerlei Aktivitätsdrift oder eine Ausfällung festgestellt werden. Dabei wurden die Beschleuniger wiederholt im Hinblick auf ihre Aktivität für die Härtung von ungesättigten Polyesterharzen untersucht, wobei jeweils 1 Gew.-Teil des Beschleunigers mit 100 Gew.-Teilen des zu untersuchenden ungesättigten Polyesterharzes und 2 Gew.-Teilen eines organischen Peroxids vermischt wurden.

2) *Untersuchung der Härtungseigenschaften*

Für die Untersuchung der Härtungseigenschaften wurden die folgenden Härter eingesetzt:

Ketonperoxide: Methyläthylketonperoxid, Methylisobutylketonperoxid, Acetylacetonperoxid und Cyclohexanonperoxid.

Hydroperoxide: tert.-Butylhydroperoxid und Cumolhydroperoxid.

Perester: tert.-Butyl-per-2-äthylhexanoat und tert.-Butylperbenzoat.

Bei der Untersuchung der Härtungseigenschaften wurde die Kalthärtung bei 23°C in 50-g-Blöcken untersucht. Für diese Untersuchung wurden Temperatur-Zeit-Diagramme aufgenommen, die in den nachstehenden Tabellen I bis II zusammengestellt sind.

In diesen Tabellen und in den nachfolgenden Tabellen besitzen die angewandten Abkürzungen die folgenden Bedeutungen:

| | |
|---|---|
| Harztyp A | ungesättigtes Polyesterharz auf Basis Orthophthalsäure |
| Harztyp B | ungesättigtes Polyesterharz auf Basis Isophthalsäure |
| Harztyp C | Bisphenol-A-Harz |
| Harztyp D | Neopentylglykolharz |

| | |
|---|---|
| Harztyp E | Vinylesterharz |
| Harztyp F | Acrylharz |
| MEKP-NA 1 | Methyläthylketonperoxid, normalaktive Lösung |
| AAP-NA 1 | Acetylacetonperoxid, niedrigaktive Lösung |
| MIKP-NA 1 | Methylisobutylketonperoxid, normalaktive Lösung |
| CHP-NA 1 | Cyclohexanonperoxid, normalaktive Lösung |
| CUHP-80 | Cumolhydroperoxid, 80% Flüssigkeit |
| TBHP-80 | tert.-Butylhydroperoxid, 80% Flüssigkeit |
| TBPEH | tert.-Butyl-per-2-äthylhexanoat |
| TBPB | tert.-Butylperbenzoat |
| MIKP-NA-M 1 | Methylisobutylketonperoxid |
| TC 510 | tert.-Butylkatechol, Inhibitor |
| ACU 1 | Beschleuniger von Beispiel 1 |
| ACU 3 | Beschleuniger von Beispiel 2 |
| AFE 1 | Beschleuniger von Beispiel 3 |
| AFE 3 | Beschleuniger von Beispiel 4 |
| ACU 1 (1.1) | Beschleuniger von Beispiel 5 |
| ACU 1 (1.2) | Beschleuniger von Beispiel 6 |
| ACU 1 (1.3) | Beschleuniger von Beispiel 7 |
| ACU 1 (1.4) | Beschleuniger von Beispiel 8 |
| ACU 1 (1.5) | Beschleuniger von Beispiel 9 |
| Acac | Acetylaceton |
| Ac-Ester | Acetessigester |
| COB 1 | Beschleuniger von Beispiel 10 |
| DTBP | Di-tert.-butylperoxid |
| BB-50+FT | Dibenzoylperoxid 50% Pulver mit Phthalat |
| BU-HA-M 1 | 2,2-Bis-(tert.-butylperoxy)butan |

*Tabelle I*

| | | | | | | | | | | | | | | | | |
|---|---|---|---|---|---|---|---|---|---|---|---|---|---|---|---|---|
| Harztyp A (Gew.-Teile) | 100 | 100 | 100 | 100 | 100 | 100 | 100 | 100 | 100 | 100 | 100 | 100 | 100 | 100 | 100 | 100 |
| MEKP-NA-1 (Gew.-Teile) | 2 | 2 | — | — | — | — | — | — | — | — | — | — | — | — | — | — |
| AAP-NA-1 (Gew.-Teile) | — | — | 2 | 2 | — | — | — | — | — | — | — | — | — | — | — | — |
| MIKP-NA-1 (Gew.-Teile) | — | — | — | — | 2 | 2 | — | — | — | — | — | — | — | — | — | — |
| CHP-NA-1 (Gew.-Teile) | — | — | — | — | — | — | 2 | 2 | — | — | — | — | — | — | — | — |
| CUHP-80 (Gew.-Teile) | — | — | — | — | — | — | — | — | 2 | 2 | — | — | — | — | — | — |
| TBHP-80 (Gew.-Teile) | — | — | — | — | — | — | — | — | — | — | 2 | 2 | — | — | — | — |
| TBPEH (Gew.-Teile) | — | — | — | — | — | — | — | — | — | — | — | — | 2 | 2 | — | — |
| TBPB (Gew.-Teile) | — | — | — | — | — | — | — | — | — | — | — | — | — | — | 2 | 2 |
| ACU 1 (Gew.-Teile) | 1 | — | 1 | — | 1 | — | 1 | — | 1 | — | 1 | — | 1 | — | 1 | — |
| AFE 1 (Gew.-Teile) | — | 1 | — | 1 | — | 1 | — | 1 | — | 1 | — | 1 | — | 1 | — | 1 |
| Gelierzeit (min) | 3,7 | 7,0 | 17 | 14 | 3,5 | 3,5 | 4,0 | 3,6 | 120 | 120 | nur Gelierung | nur Gelierung | härtet über Nacht | härtet über Nacht | härtet über Nacht | härtet über Nacht |
| Härtungszeit (min) | 5,8 | 19 | 26 | 34 | 5,8 | 6,5 | 7,8 | 8,8 | 160 | 170 | | | | | | |
| Temp. Peak[1] | 205 | 195 | 196 | 187 | 202 | 196 | 210 | 195 | 191 | 176 | | | | | | |

[1] Temperaturmaximum (°C).

*Tabelle II*

| | | | | | | |
|---|---|---|---|---|---|---|
| Harztyp A (Gew.-Teile) | 100 | 100 | 100 | 100 | 100 | 100 |
| ACU 1 (1.1) (Gew.-Teile) | 1 | — | — | — | — | — |
| ACU 1 (1.2) (Gew.-Teile) | — | 1 | — | — | — | — |
| ACU 1 (1.3) (Gew.-Teile) | — | — | 1 | — | — | — |
| ACU 1 (1.4) (Gew.-Teile) | — | — | — | 1 | — | — |
| ACU 1 (1.5) (Gew.-Teile) | — | — | — | — | 1 | — |
| ACU 1 (Gew.-Teile) | — | — | — | — | — | 1 |
| MEKP- HA 1 (Gew.-Teile) | 2 | 2 | 2 | 2 | 2 | 2 |
| Gelierzeit (min) | 5,2 | 5,2 | 5,2 | 5,2 | 5,2 | 5,2 |
| Härtungszeit (min) | 8,1 | 9,0 | 8,3 | 8,2 | 9,0 | 8,1 |
| Temp. Peak | 202 | 210 | 208 | 208 | 207 | 206 |

*Tabelle III*

| | | | | | | | | | | | | |
|---|---|---|---|---|---|---|---|---|---|---|---|---|
| Harztyp A (Gew.-Teile) | 100 | 100 | — | — | — | — | — | — | — | — | — | — |
| Harztyp B (Gew.-Teile) | — | — | 100 | 100 | — | — | — | — | — | — | — | — |
| Harztyp C (Gew.-Teile) | — | — | — | — | 100 | 100 | — | — | — | — | — | — |
| Harztyp D (Gew.-Teile) | — | — | — | — | — | — | 100 | 100 | — | — | — | — |
| Harztyp E (Gew.-Teile) | — | — | — | — | — | — | — | — | 100 | 100 | — | — |
| Harztyp F (Gew.-Teile) | — | — | — | — | — | — | — | — | — | — | 100 | 100 |
| ACU 1 (Gew.-Teile) | 1 | — | 1 | — | 1 | — | 1 | — | 1 | — | — | — |
| ACU 3 (Gew.-Teile) | — | — | — | — | — | — | — | — | — | — | 1 | — |
| AFE 1 (Gew.-Teile) | — | 1 | — | 1 | — | 1 | — | 1 | — | 1 | — | — |
| AFE 3 (Gew.-Teile) | — | — | — | — | — | — | — | — | — | — | — | 1 |
| MIKP-NA-M 1 (Gew.-Teile) | 2 | 2 | 2 | 2 | 2 | 2 | 2 | 2 | 2 | 2 | 2 | 2 |
| Gelierzeit (min) | 3,7 | 7,0 | 20 | 13 | 26 | 40 | 5 | 4 | 15 | 15 | 8 | 6 |
| Härtungszeit (min) | 5,8 | 19 | 28 | 26 | 37 | 75 | 8,5 | 10 | 27 | 84 | 19 | 32 |
| Temp. Peak | 205 | 195 | 207 | 203 | 200 | 35 | 140 | 135 | 190 | 62 | 160 | 134 |

*Tabelle IV*

| | | | | |
|---|---|---|---|---|
| Harztyp A (Gew.-Teile) | 100 | 100 | — | — |
| Harztyp E (Gew.-Teile) | — | — | 100 | 100 |
| ACU 3 (Acac)[1] (Gew.-Teile) | 0,5 | — | 1 | — |
| ACU 3 (Ac-Ester)[2] (Gew.-Teile) | — | 0,5 | — | 1 |
| MIKP-NA-M 1 (Gew.-Teile) | 2 | 2 | 2 | 2 |
| Gelierzeit (min) | 10,5 | 4,6 | 22 | 5 |
| Härtungszeit (min) | 14,5 | 7,2 | 31 | 15 |
| Temp. Peak | 214 | 205 | 190 | 193 |

[1] Mit Acetylaceton hergestellt.
[2] Mit Acetessigsäureäthylester hergestellt.

Aus den obigen Tabellen I bis IV ist ersichtlich, dass die erfindungsgemässen Eisenketiminbeschleuniger praktisch ebenso wirksam sind wie die von Kupfer abgeleiteten.

Es ist nur eine leichte Gelbfärbung der kaltgehärteten Harze zu beobachten. Bei den stark eigengefärbten Harztypen B, C, D und E ist keine Verfärbung durch den Beschleuniger feststellbar. Werden die kalt gehärteten Teile einer künstlichen Schnellbewitterung unterzogen, so tritt eine minimale gelbliche Verfärbung auf.

Gereinigte, definierte Füllstoffe haben keinerlei Einfluss auf den Kalthärtungsablauf. Bei Verwendung von natürlich abgebauten Füllstoffen muss eine Vorprüfung vorgenommen werden.

3) *Aushärtungsgrad*

Die Messungen erfolgten an Laminaten (mit dem Harzansatz getränkte Glasmatten). Es wurde der Aushärtungsgrad anhand des Reststyrolgehalts (der gaschromatographisch ermittelt wurde) und des dielektrischen Verlustfaktors (tgδ) ermittelt. Die Laminatdicke betrug einheitlich 2 mm.

Weiterhin wurden die Bestimmungen des Aushärtungsgrads nach der Nachhärtung in der Wärme wiederholt. Die Laminate wurden zu diesem Zweck während 4 h bei 100° C getempert. Die hierbei erhaltenen Ergebnisse sind in den nachstehenden Tabellen V und VI zusammengestellt.

*Tabelle V*

| | | | | | | | | | | | | |
|---|---|---|---|---|---|---|---|---|---|---|---|---|
| Harztyp A | 100 | 100 | 100 | 100 | 100 | 100 | 100 | 100 | 100 | 100 | — | — |
| Harztyp E | — | — | — | — | — | — | — | — | — | — | 100 | 100 |
| MEKP-NA-1 | 2 | 2 | — | — | — | — | — | — | — | — | — | — |
| MIKP-NA-M 1 | — | — | 2 | 2 | — | — | — | — | — | — | 2 | 2 |
| AAP-NA-1 | — | — | — | — | 2 | 2 | — | — | — | — | — | — |
| CUHP-80 | — | — | — | — | — | — | 2 | 2 | — | — | — | — |
| TBPEH | — | — | — | — | — | — | — | — | 2 | 2 | — | — |
| ACU 1 | 1 | — | 1 | — | 1 | — | 1 | — | 1 | — | — | — |
| ACU 3 | — | — | — | — | — | — | — | — | — | — | 1 | — |
| AFE 1 | — | 1 | — | 1 | — | 1 | — | 1 | — | 1 | — | — |
| AFE 3 | — | — | — | — | — | — | — | — | — | — | — | 1 |
| | Becherhärtung bei 23°C/50 g | | | | | | | | | | | |
| Gelierzeit (min) | 4,5 | 7,0 | 13 | 12 | 17 | 14 | 120 | 120 | >8 h | >8 h | 13 | 15 |
| Härtungszeit (min) | 8,5 | 19 | 18 | 20 | 26 | 34 | 160 | 170 | <16 h | <16 h | 31 | 84 |
| Temp. Peak | 207 | 187 | 202 | 204 | 196 | 187 | 191 | 176 | — | — | 188 | 62 |
| | Laminathärtung 2 mm bei Raumtemperatur | | | | | | | | | | | |
| * Entformzeit (min) | 12 | 240 | 28 | 42 | 43 | 120 | 240 | 210 | 8-16 h | 8-16 h | 45 | 10 h |
| t g ohne Tempern | 32 | 34 | 21 | 21 | 18 | 33 | 19 | 25 | 32 | 35 | 1,3 | $8{,}0\times10^{-3}$ |
| Reststyrolgehalt (%) ohne Tempern | 1,8 | 1,9 | 0,8 | 1,4 | 1,6 | 2,5 | 1,0 | 1,4 | 2,0 | 3,8 | 4,2 | 9,8 |
| t g 4 h 100°C | 2,5 | 3,4 | 1,8 | 1,9 | 2,5 | 2,0 | 1,9 | 1,7 | 1,8 | 1,0 | 0,2 | $0{,}2\times10^{-3}$ |
| Reststyrolgehalt (%) 4 h 100°C | 0,0 | 0,3 | 0,0 | 0,0 | 0,01 | 0,06 | 0,0 | 0,0 | 0,0 | 0,04 | 0,01 | 1,6 |

* Entformzeit bedeutet: Erreichen einer Oberflächenhärte des Laminats von Shore D 70 (willkürlich, jedoch praxisnah) vom Beginn des Ansetzens.

*Tabelle VI*

*Einfluss des Beschleunigers bei der Warmhärtung im mittleren Temperaturbereich (die Härtung erfolgte bei 80°C im Reagenzglas)*

| | | | | | | | | | | | | | | | |
|---|---|---|---|---|---|---|---|---|---|---|---|---|---|---|---|
| Harztyp A | 100 | 100 | 100 | 100 | 100 | 100 | 100 | 100 | 100 | 100 | 100 | 100 | 100 | 100 | 100 |
| TBPB | 1 | 1 | 1 | — | — | — | — | — | — | — | — | — | — | — | — |
| BU-HA-M 1 | — | — | — | 2 | 2 | 2 | — | — | — | — | — | — | — | — | — |
| DTBP | — | — | — | — | — | — | 1 | 1 | 1 | — | — | — | — | — | — |
| BP-50+FT | — | — | — | — | — | — | — | — | — | 2 | 2 | 2 | — | — | — |
| TBHP-80 | — | — | — | — | — | — | — | — | — | — | — | — | 2 | 2 | 2 |
| ACU 1 | — | 0,5 | — | — | 0,5 | — | — | 0,5 | — | — | 0,5 | — | — | 0,5 | — |
| AFE 1 | — | — | 0,5 | — | — | 0,5 | — | — | 0,5 | — | — | 0,5 | — | — | 0,5 |
| Gelierzeit (min) | 39 | 5,7 | 10 | 7,5 | 5,0 | 5,6 | — | — | 21 | 7,0 | 5,5 | 5,2 | 17,5 | 7,0 | 9,3 |
| Härtungszeit (min) | 49 | 9,3 | 16 | 9,5 | 7,0 | 7,5 | — | — | 34 | 8,7 | 7,8 | 7,0 | 38 | 14,0 | 21 |
| Temp. Peak | 230 | 230 | 235 | 240 | 240 | 240 | — | — | 225 | 240 | 235 | 237 | 110 | 240 | 203 |
| | Gleiche Rezepturen wie oben, jedoch mit Harztyp E | | | | | | | | | | | | | | |
| Gelierzeit (min) | — | 10 | — | 30 | 10 | 19 | — | — | — | 15 | 15 | 13 | | | |
| Härtungszeit (min) | — | 19 | — | 35 | 15 | 23 | — | — | — | 18 | 24 | 16 | | | |
| Temp. Peak | — | 223 | — | 240 | 230 | 230 | — | — | — | 223 | 172 | 210 | | | |

4) Es wurde weiterhin die Lagerstabilität von Kupfer(II)- bzw. Eisen(III)verbindungen enthaltenden Beschleunigern in Polyesterharzen untersucht. Es wurden jeweils 50 g Harzproben, die unterschiedliche Mengen an Beschleunigern enthielten, untersucht. Es wurde die Gelierung der Ansätze beurteilt. Die hierbei erhaltenen Ergebnisse sind in der nachstehenden Tabelle VII zusammengestellt.

*Tabelle VII*

| | | | | | | | | | | |
|---|---|---|---|---|---|---|---|---|---|---|
| Harztyp A | 100 | 100 | — | — | — | — | — | — | — | — |
| Harztyp B | — | — | 100 | 100 | — | — | — | — | — | — |
| Harztyp C | — | — | — | — | 100 | 100 | — | — | — | — |
| Harztyp D | — | — | — | — | — | — | 100 | 100 | — | — |
| Harztyp E | — | — | — | — | — | — | — | — | 100 | 100 |
| ACU 1 | 0,5 | 1,0 | 0,5 | 1,0 | 0,5 | 1,0 | 0,5 | 1,0 | — | — |
| ACU 3 | — | — | — | — | — | — | — | — | 0,5 | 1,0 |
| Lagerzeit bis zum Gelieren (d) | >100 | >100 | >100 | >100 | >100 | >100 | >100 | >100 | 22 | 19 |

Aus der obigen Tabelle VII ist zu erkennen, dass die erfindungsgemässen Beschleuniger eine hohe Lagerstabilität besitzen.

5) Es ist möglich, die Verarbeitungszeit der Harzansätze durch Zusätze von üblichen Inhibitoren, wie tert.-Butylkatechol, zu verlängern. Die bei diesen Untersuchungen ermittelten Ergebnisse sind in der nachstehenden Tabelle VIII zusammengestellt.

*Tabelle VIII*

*Verlängerung der Gelierzeit von Harzansätzen*

| | | | | | | |
|---|---|---|---|---|---|---|
| Harztyp A | 100 | 100 | 100 | 100 | 100 | 100 |
| MIKP-NA-M 1 | 2 | 2 | 2 | 2 | 2 | 2 |
| ACU 1 | 1 | 1 | 1 | — | — | — |
| AFE 1 | — | — | — | 1 | 2 | 1 |
| TC 510 | — | 0,1 | 0,5 | — | 0,1 | 0,5 |
| Gelierzeit (min) | 3,7 | 13 | 30 | 7,0 | 10,2 | 22 |
| Härtungszeit (min) | 5,8 | 18 | 37 | 19 | 22 | 31 |
| Temp. Peak | 205 | 202 | 204 | 195 | 193 | 187 |

6) Zu Vergleichszwecken wurde eine Härtung des Harztyps A untersucht, wobei das in Beispiel 1 eingesetzte Ketimin (Acetylacetoncyclohexylimin) getrennt mit einem Kobaltbeschleuniger (Kobaltoctoat bzw. Kobaltnaphtenat) vermischt wurde, da ja die Bildung eines Beschleunigers nicht möglich ist, wie sich aus dem obigen Vergleichsbeispiel 10 ergibt.

Die bei dieser Untersuchung ermittelten Ergebnisse sind in der nachstehenden Tabelle IX zusammengestellt.

*Tabelle IX*

| | | |
|---|---|---|
| Harztyp A | 100 | 100 |
| COB 1 | 0,5 | 0,5 |
| Ketimin von Beispiel 1 | — | 0,005 |
| MEKP-HA-1 | 2 | 2 |
| Gelierzeit (min) | 6 | 5 |
| Härtungszeit (min) | 12 | 10 |
| Temp. Peak | 203 | 210 |

Aus der obigen Tabelle IX ist ein geringer Promotoreffekt ersichtlich.

Aus den obigen Tabellen ist zu erkennen, dass die erfindungsgemässen Beschleuniger hervorragend für die Härtung der angesprochenen ungesättigten Harze geeignet sind, nur wenig verfärbte und recht lichtstabile Produkte liefern, die bei anschliessender Bewitterung keine merkliche weitere Veränderung in ihrer Färbung zeigen, und dass die erfindungsgemässen Beschleuniger den vorbekannten Beschleunigern (siehe die Vergleichsbeispiele) in ihrer Beschleunigungswirkung und in ihrer Lagerstabilität erheblich überlegen sind.

**Patentansprüche**

1. Beschleuniger für die Härtung von ungesättigten Harzen, gekennzeichnet durch ein Gemisch aus mindestens einem Ketimin und mindestens einer anorganischen oder organischen Kupfer(II)- oder Eisen(III)verbindung.

2. Beschleuniger nach Anspruch 1, dadurch gekennzeichnet, dass er als organische Kupfer(II)- oder Eisen(III)verbindung ein Salz einer Fettsäure mit 6 bis 22 Kohlenstoffatomen oder einer Naphthensäure enthält.

3. Beschleuniger nach einem der Ansprüche 1 oder 2, dadurch gekennzeichnet, dass er als Kupfer(II)- bzw. Eisen(III)verbindung Kupfer(II)acetat, Kupfer(II)naphthenat, Eisen(III)chlorid und/oder Eisen(III)octoat enthält.

4. Beschleuniger nach den Ansprüchen 1 bis 3, dadurch gekennzeichnet, dass er ein Ketimin der allgemeinen Formel (I)

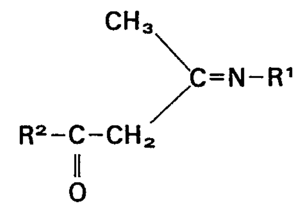
(I)

in der

$R^1$ Wasserstoff, eine geradkettige oder verzweigte Alkylgruppe oder Aralkylgruppe mit 1 bis 10 Kohlenstoffatomen oder eine Cycloalkylgruppe mit 3 bis 8 Kohlenstoffatomen, und

$R^2$ eine Alkylgruppe oder Alkoxygruppe mit 1 bis 4 Kohlenstoffatomen oder eine Aryl- oder Aryloxygruppe bedeuten, enthält.

5. Beschleuniger nach Anspruch 4, dadurch gekennzeichnet, dass er ein Ketimin der allgemeinen Formel (I) enthält, in der $R^1$ eine Cyclohexylgruppe und $R^2$ eine Methylgruppe oder eine Äthoxygruppe bedeuten.

6. Beschleuniger nach den vorhergehenden Ansprüchen, dadurch gekennzeichnet, dass das Gemisch in einem organischen Lösungsmittel gelöst ist.

7. Beschleuniger nach Anspruch 6, dadurch gekennzeichnet, dass er als Lösungsmittel einen Alkohol oder einen aromatischen Kohlenwasserstoff enthält.

8. Beschleuniger nach Anspruch 7, dadurch gekennzeichnet, dass er als Lösungsmittel Isopropylalkohol, Xylol oder Toluol enthält.

9. Beschleuniger nach mindestens einem der vorhergehenden Ansprüche, dadurch gekennzeichnet, dass er einen Gehalt an Kupfer bzw. Eisen, als Metall gerechnet und auf den gegebenenfalls lösungsmittelhaltigen Beschleuniger bezogen, von 0,1 bis 1 Gew.-% aufweist.

10. Beschleuniger nach Anspruch 9, dadurch gekennzeichnet, dass er einen Kupfer- bzw. Eisengehalt von etwa 0,2 Gew.-% aufweist.

11. Verfahren zur Härtung von ungesättigten Harzen, dadurch gekennzeichnet, dass man als Beschleuniger mindestens ein Ketimin und mindestens eine anorganische oder organische Kupfer(II)- oder Eisen(III)verbindung in Kombination mit einem üblichen Härter verwendet.

12. Verfahren nach Anspruch 11, dadurch gekennzeichnet, dass man als Härter ein Ketonperoxid, ein Hydroperoxid und/oder einen Perester einsetzt.

13. Verfahren nach Anspruch 12, dadurch gekennzeichnet, dass man als Härter Methyläthylketonperoxid, Methylisobutylketonperoxid, Acetylacetonperoxid, Cyclohexanonperoxid, tert.-Butylhydroperoxid, Cumolhydroperoxid, tert.-Butyl-per-2-äthylhexanoat und/oder tert.-Butylperbenzoat verwendet.

14. Verfahren nach einem der Ansprüche 11 bis 13, dadurch gekennzeichnet, dass der Beschleuniger in einer Menge verwendet wird, die 0,001 bis 0,02 Gew.-% Metall und 0,005 bis 0,5 Gew.-% Ketimin, jeweils bezogen auf das Harz, entspricht.

15. Verfahren nach Anspruch 14, dadurch gekennzeichnet, dass man 0,2 bis 2 Gew.-% Beschleuniger zusetzt.

16. Verfahren nach Anspruch 11, dadurch gekennzeichnet, dass man ein Ketimin der allgemeinen Formel (I)

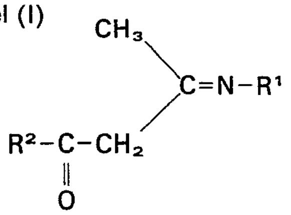

(I)

in der

$R^1$ Wasserstoff, eine geradkettige oder verzweigte Alkylgruppe oder Aralkylgruppe mit 1 bis 10 Kohlenstoffatomen oder eine Cycloalkylgruppe mit 3 bis 8 Kohlenstoffatomen, und

$R^2$ eine Alkylgruppe oder Alkoxygruppe mit 1 bis 4 Kohlenstoffatomen oder eine Aryl- oder Aryloxygruppe bedeuten, verwendet.

17. Verfahren nach Anspruch 11, dadurch gekennzeichnet, dass man als organische Kupfer(II)- oder Eisen(III)verbindung ein Salz einer Fettsäure mit 6 bis 22 Kohlenstoffatomen oder einer Naphthensäure verwendet.

18. Verfahren nach einem der Ansprüche 11 oder 16, dadurch gekennzeichnet, dass man das Ketimin *in situ* einsetzt, in Form einer Mischung aus primärem Alkylamin und β-Diketon.

19. Verfahren nach Anspruch 18, dadurch gekennzeichnet, dass man eine Mischung eines primären Amins der allgemeinen Formel (II)

$$H_2NR^1 \quad (II)$$

mit einer Verbindung der allgemeinen Formel (III)

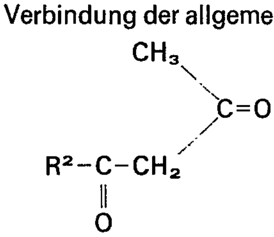

(III)

in welchen allgemeinen Formeln $R^1$ und $R^2$ die in Anspruch 16 angegebenen Bedeutungen besitzen, verwendet.

## Claims

1. Accelerator for the hardening of unsaturated resins, characterised by a mixture of at least one ketimine and at least one inorganic or organic copper(II) or iron(III) compound.

2. Accelerator according to claim 1, characterised in that, as organic copper(II) or iron(III) compound, it contains a salt of a fatty acid with 6 to 22 carbon atoms or of a naphthenic acid.

3. Accelerator according to claim 1 or 2, characterised in that, as copper(II) or iron(III) compound, it contains copper(II)acetate, copper(II)naphthenate, iron(III)chloride and/or iron(III)octoate.

4. Accelerator according to claims 1 to 3, characterised in that it contains a ketimine of the general formula (I)

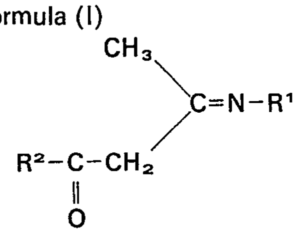

(I)

in which

$R^1$ signifies hydrogen, a straight-chained or branched alkyl group or aralkyl group with 1 to 10 carbon atoms or a cycloalkyl group with 3 to 8 carbon atoms, and

$R^2$ signifies an alkyl group or alkoxy group with 1 to 4 carbon atoms or an aryl or aryloxy group.

5. Accelerator according to claim 4, characterised in that it contains a ketimine of the general formula (I), in which $R^1$ signifies a cyclohexyl group and $R^2$ a methyl group or an ethoxy group.

6. Accelerator according to the preceding claims, characterised in that the mixture is dissolved in an organic solvent.

7. Accelerator according to claim 6, characterised in that, as solvent, it contains an alcohol or an aromatic hydrocarbon.

8. Accelerator according to claim 7, characterised in that, as solvent, it contains isopropyl alcohol, xylene or toluene.

9. Accelerator according to at least one of the preceding claims, characterised in that it has a content of copper or iron, calculated as metal and referred to the optionally solvent-containing accelerator, of 0.1 to 1 wt.-%.

10. Accelerator according to claim 9, characterised in that it has a copper or iron content of about 0.2 wt.-%.

11. Process for the hardening of unsaturated resins, characterised in that, as accelerator, one uses at least one ketimine and at least one inorganic or organic copper(II) or iron(III) compound, in combination with a conventional hardener.

12. Process according to claim 11, characterised in that, as hardener, one uses a ketone peroxide, a hydroperoxide and/or a perester.

13. Process according to claim 12, characterised in that, as hardener, one uses methyl ethyl ketone peroxide, methyl isobutyl ketone peroxide, acetylacetone peroxide, cyclohexanone peroxide, tert.-butyl hydroperoxide, cumol hydroperoxide, tert.-butyl per-2-ethylhexanoate and/or tert.-butyl perbenzoate.

14. Process according to one of claims 11 to 13, characterised in that the accelerator is used in an amount which corresponds to 0.001 to 0.02 wt. % of metal and 0.005 to 0.5 wt.-% of ketimine, in each case referred to the resin.

15. Process according to claim 14, characterised in that one adds 0.2 to 2 wt.-% of accelerator.

16. Process according to claim 11, characterised in that one uses a ketimine of the general formula (I)

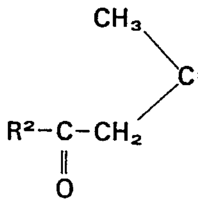 (I)

in which

$R^1$ signifies hydrogen, a straight-chained or branched alkyl group or aralkyl group with 1 to 10 carbon atoms or a cycloalkyl group with 3 to 8 carbon atoms, and

$R^2$ signifies an alkyl group or alkoxy group with 1 to 4 carbon atoms or an aryl or aryloxy group.

17. Process according to claim 11, characterised in that, as organic copper(II) or iron(III) compound, one uses a salt of a fatty acid with 6 to 22 carbon atoms or of a naphthenic acid.

18. Process according to claim 11 or 16, characterised in that one uses the ketimine *in situ* in the form of a mixture of primary alkylamine and β-diketone.

19. Process according to claim 18, characterised in that one uses a mixture of a primary amine of the general formula (II)

$$H_2NR^1 \quad (II)$$

with a compound of the general formula (III)

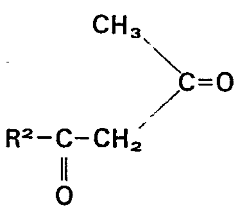 (III)

in which general formulae $R^1$ and $R^2$ have the meanings given in claim 16.

## Revendications

1. Accélérateur pour le durcissement de résines insaturées, caractérisé en ce qu'il consiste en un mélange d'au moins une cétimine et d'au moins un composé minéral ou organique du cuivre-II ou du fer-III.

2. Accélérateur selon la revendication 1, caractérisé en ce qu'il contient, en tant que composé organique du cuivre-II ou du fer-III, un sel d'un acide gras en C6-C22 ou d'un acide naphténique.

3. Accélérateur selon l'une des revendications 1 ou 2, caractérisé en ce qu'il contient, en tant que composé du cuivre-II ou du fer-III, l'acétate de cuivre-II, le naphténate de cuivre-II, le chlorure de fer-III et/ou l'octanoate de fer-III.

4. Accélérateur selon les revendications 1 à 3, caractérisé en ce qu'il contient une cétimine de formule générale (I):

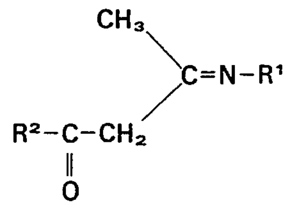 (I)

dans laquelle:

$R^1$ représente l'hydrogène, un groupe alkyle à chaîne droite ou ramifiée ou aralkyle en C1-C10 ou un groupe cycloalkyle en C3-C8, et

$R^2$ représente un groupe alkyle ou alcoxy en C1-C4 ou un groupe aryle ou aryloxy.

5. Accélérateur selon la revendication 4, caractérisé en ce qu'il contient une cétimine de formule générale (I) dans laquelle $R^1$ représente un groupe cyclohexyle et $R^2$ un groupe méthyle ou un groupe éthoxy.

6. Accélérateur selon les revendications précédentes, caractérisé en ce que le mélange est dissous dans un solvant organique.

7. Accélérateur selon la revendication 6, caractérisé en ce qu'il contient, en tant que solvant, un alcool ou un hydrocarbure aromatique.

8. Accélérateur selon la revendication 7, caractérisé en ce qu'il contient, en tant que solvant, l'alcool isopropylique, le xylène ou le toluène.

9. Accélérateur selon l'une au moins des revendications précédentes, caractérisé en ce qu'il contient du cuivre ou du fer en quantité de 0,1 à 1% en poids, exprimé en métal et par rapport à l'accélérateur contenant éventuellement un solvant.

10. Accélérateur selon la revendication 9, caractérisé en ce qu'il contient du cuivre ou du fer en proportion d'environ 0,2% en poids.

11. Procédé pour durcir des résines insaturées, caractérisé en ce que l'on utilise en tant qu'accélérateur au moins une cétimine et au moins un composé minéral ou organique du cuivre-II ou du fer-III en combinaison avec un durcisseur usuel.

12. Procédé selon la revendication 11, caractérisé en ce que l'on utilise en tant que durcisseur un peroxyde de cétone, un hydroperoxyde et/ou un perester.

13. Procédé selon la revendication 12, caractérisé en ce que l'on utilise en tant que durcisseur le peroxyde de la méthyléthylcétone, le peroxyde de la méthylisobutylcétone, le peroxyde de l'acétylacétone, le peroxyde de la cyclohexanone, l'hydroperoxyde de tert.-butyle, l'hydroperoxyde de cumène, le per-2-éthylhexanoate de tert.-butyle et/ou le perbenzoate de tert.-butyle.

14. Procédé selon l'une des revendications 11 à 13, caractérisé en ce que l'on utilise l'accélérateur en quantité correspondant à 0,001 à 0,02% en poids de métal et 0,005 à 0,5% en poids de cétimine, dans les deux cas par rapport à la résine.

15. Procédé selon la revendication 14, caractérisé en ce que l'on ajoute de 0,2 à 2% en poids de l'accélérateur.

16. Procédé selon la revendication 11, caractérisé en ce que l'on utilise une cétimine de formule générale (I):

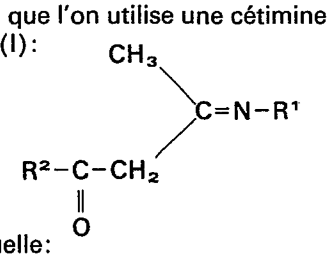 (I)

dans laquelle:

$R^1$ représente l'hydrogène, un groupe alkyle à chaîne droite ou ramifiée ou un groupe aralkyle en C1-C10 ou un groupe cycloalkyle en C3-C8, et

$R^2$ représente un groupe alkyle ou alcoxy en C1-C4 ou un groupe aryle ou aryloxy.

17. Procédé selon la revendication 11, caractérisé en ce que l'on utilise, en tant que composé organique du cuivre-II ou du fer-III, un sel d'un acide gras en C6-C22 ou d'un acide naphténique.

18. Procédé selon l'une des revendications 11 ou 16, caractérisé en ce que l'on met en œuvre la cétimine *in situ* sous la forme d'un mélange d'une alkylamine primaire et d'une β-dicétone.

19. Procédé selon la revendication 18, caractérisé en ce que l'on utilise un mélange d'une amine primaire de formule générale (II):

$$H_2NR^1 \qquad (II)$$

avec un composé de formule (III):

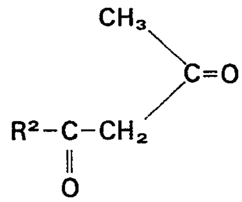 (III)

les symboles $R^1$ et $R^2$ de ces formules générales ayant les significations indiquées à la revendication 16.